# EUROPEAN PATENT SPECIFICATION

(11) **EP 0 274 436 B1**
(45) Date of publication and mention of the grant of the patent: **26.10.1994**
(21) Application number: 88300102.6
(22) Date of filing: 07.01.1988
(51) Int. Cl.: G06F 15/20

(54) **Word processing apparatus**
Textverarbeitungsapparat
Appareil de traitement de textes

(30) Priority: 07.01.1987 JP 2079/87
(43) Date of publication of application: 13.07.1988
(73) Proprietor: BROTHER KOGYO KABUSHIKI KAISHA, Nagoya-shi, Aichi-ken 467 (JP)
(72) Inventor: Toshiyuki,Sakai c/o Brother Kogyo Kabushiki Kaisha, Nagoya-shi Aichi-ken (JP)
(74) Representative: Senior, Alan Murray

(56) References cited:
- EP-A- 0 097 818
- EP-A- 0 203 324
- US-A- 4 559 598

## Description

The present invention relates to a word processing apparatus provided with a users' dictionary memory, and more specifically relates to a word processing apparatus which can easily perform word register and word delete into and from the users' dictionary memory.

In general, word processing apparatuses, for example, electronic typewriters are equipped with a ROM (read only memory)-type dictionary memory and a RAM (random access memory)-type users' dictionary memory in a controlling apparatus thereof, and the user can freely register or delete proper nouns, words, phrases and the like which are not stored in the dictionary memory into the users' dictionary memory.

Then, where the spelling check mode is set in the memory mode, if a space is entered as a sectioning data after a proper noun or the like has been entered, the proper noun is judged to be a wrongly spelled word by alarm.

In this case, that proper noun can be registered into the users' dictionary memory by depressing a register key.

Also, by moving a cursor to the display position of a desired word already inputted and then depressing the register key, that word can be registered into the users' dictionary memory.

When deleting a word from the users' dictionary memory, by depressing a delete key after entering the word, the word is deleted from the users' dictionary memory, or by moving the cursor to the display position of a desired word already inputted and then depressing a delete key, the desired word is deleted from the users' dictionary memory.

On the other hand, where the spelling check mode is set in the typewriter mode, if a space as a sectioning data is entered after a proper noun or the like has been printed, the proper noun is judged to be a wrongly spelled word by alarm.

In this case, the proper noun can be registered to the users' dictionary memory by depressing the register key.

Also, by moving a print head to the print position of a desired word already printed and then depressing the register key, that word can be registered into the users' dictionary memory.

When deleting a word from the users' dictionary memory, the word is deleted from the users' dictionary memory by depressing the delete key after printing the word, or by moving the print head to the print position of a desired word and then depressing the delete key, that desired word is deleted from the users' dictionary memory.

In the conventional electronic typewriters provided with the above-mentioned dictionary memory and users' dictionary memory, in case that a word is registered or deleted into or from the users' dictionary memory in the memory mode, only when the word is inputted lastly and the cursor is not moved, the word can be registered into the users' dictionary memory by depressing the register key, and the word can be deleted from the users' dictionary memory by depressing the delete key. However, as to the word other than that word, it is required to move the cursor to the display position of the word already inputted and displayed on a display.

Also, in the case of the typewriter mode, only when the word is printed lastly and the print head is not moved, the word can be registered into the users' dictionary memory by depressing the register key, and the word can be deleted from the users' dictionary memory by depressing the delete key. However, as to the word other than that word, it is required to move a carriage to the print position of the word already printed by depressing a space key or a backspace key, and thus a problem remains that registering processing or deleting processing of the word cannot be performed quickly and the operability is inferior.

Other word processing apparatus exists such as is described in US-A-4,559,598. Text is created by selecting words from what amounts to a dictionary. If a word is not found immediately more words can be searched through by beginning to spell the word out. If a word has to be spelt out in full then that word can be registered into a screen of most frequently used words or into the main body of the "dictionary".

The object of the present invention is to provide a word processing apparatus capable of easily performing word registering process and word deleting processing even after moving a cursor or after moving a print head without pointing out the word to be registered or deleted into or from a users' dictionary memory by the cursor or the print head.

According to the present invention there is provided a word processor comprising:
input means for entering data of characters, symbols and the like;
output means for outputting characters and symbols onto an output medium;
a users' dictionary memory for storing entered words and phrases; and
register control means for storing a word in said users' dictionary memory on receiving a register command;
characterised in that
the word to be stored is the word nearest to a pointer element of said output means, in one of the forward space and back space directions, among words outputted onto said output medium, even when said word is separated from said pointer element by a plurality of spaces.

The present invention may include delete control means for deleting the word nearest to the pointer element of the output means among words outputted onto said output medium from said users' dictionary memory, on receiving a delete command.

Preferably, said input means has a register key for inputting a register command signal and a delete key for inputting a delete command signal; a first memory for storing data inputted from said input means; the output means outputting characters and symbols corresponding to data stored in said first memory, and a second memory for storing the present position of said pointer element of said output means; said register control means operating on the basis of data in said second memory and data in said first memory on receiving said register command signal inputted from said register key; and said delete control means operating on the basis of data in said second memory and data in said first memory on receiving said delete command signal inputted from said delete key.

In accordance with the word processing apparatus of the present invention, as described above, the word nearest to the pointer element of the outputting means is stored in the users' dictionary memory on receiving the register command, and the word nearest to the pointer element of the outputting means is deleted from the users' dictionary memory on receiving the delete command, and therefore where the outputting medium is a display, it is not required to move the cursor by depressing the cursor move key, and where the outputting medium is a print paper, it is not required to move the carriage by depressing the space key or the backspace key, and therefore the operability is improved and the registering processing or the deleting processing can be performed quickly.

The drawings show a preferred embodiment in accordance with the present invention.
Fig. 1 is a partially-cut-out perspective view of an electronic typewriter,
Fig. 2 is a block diagram of a control system of the typewriter,
Fig. 3 is a flow chart of a routine of register/delete processing control, and
Figs. 4(a) - (c) are explanatory views of registering processing or deleting processing of a word in the memory mode, respectively.

Hereinafter, description is made on a preferred embodiment in accordance with the present invention with reference to drawings.

This embodiment is of the case where the present invention is applied to an electronic typewriter.

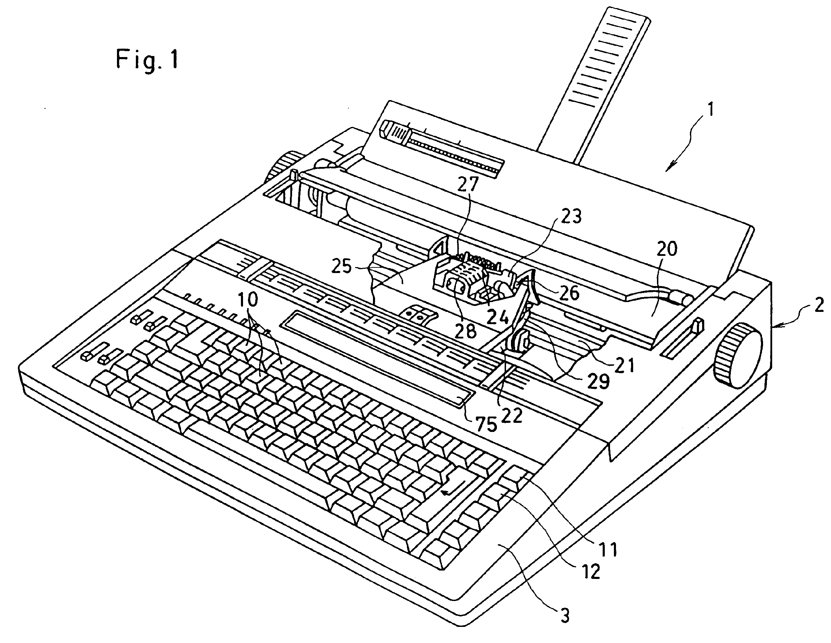

As shown in Fig. 1, a keyboard 3 is disposed in the front part of a main frame 2 of the typewriter 1, and a printing mechanism PM is disposed behind the keyboard 3 in the main frame 2, and a one-line LCD display (liquid crystal display) 7 for displaying the inputted characters, symbols and the like is installed in the rear part of the keyboard 3.

On the keyboard 3, alphabet keys, numeral keys, symbol keys and various function keys are installed likewise the ordinary typewriter, and further a register key 11 for registering (to register means to store in a memory) a word into a users' dictionary memory 55 and a delete key 12 for deleting a word registered in the users' memory 55 are installed on the keyboard 3.

In the printing mechanism PM, at least a platen 20 feeding a print paper and a motor driving it and a drive circuit thereof, a carriage 22 supported by a guide 21 parallel to the platen 20 and a motor driving it right and left reciprocatively and a drive circuit thereof, a type-wheel 24 housed in a wheel cassette 23 and a motor driving it and a drive circuit thereof, a type ribbon 26 stored in a ribbon cassette 25 and a motor taking it up and a drive circuit thereof, a print hammer for hammering a type 27 of the type-wheel 24 and a solenoid 28 driving it and a drive circuit thereof, and a ribbon change-over mechanism selectively disposing the print ribbon 26 or a correction ribbon 29 to the print position are installed, and this printing mechanism PM is the same as the printing mechanism of the ordinary electronic typewriter.

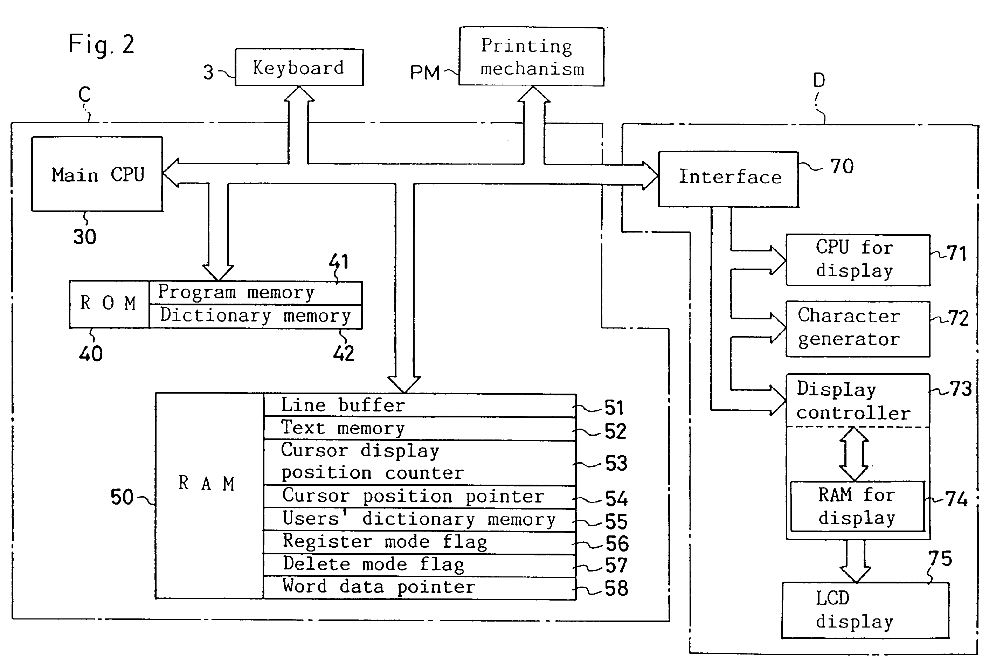

Next, description is made on the whole configuration of a control system of the electronic typewriter 1 with reference to a block diagram in Fig. 2.

Basically the typewriter 1 is configurated with the keyboard 3, the printing mechanism PM, a displaying mechanism D and a controlling apparatus C, and the keyboard 3, the printing mechanism PM and the displaying mechanism D are connected to a main CPU (central processing unit) 30 through a data bus and the like.

The above-mentioned controlling apparatus C is configurated with the main CPU 30 and a ROM (read only memory) 40 and a RAM (random access memory) 50 which are connected to the main CPU 30 through the data bus and the like.

In a program memory 41 of the ROM 40, a control program for controlling the printing mechanism PM and the displaying mechanism D so as to correspond to code data inputted from each character key and various function keys on the keyboard 3, a spelling check control program for spelling check processing, a control program for register/delete processing control as described later and the like are stored.

In a dictionary memory 42 of the ROM 40, for example, data of about 70,000 words are stored while classified in the alphabetic sequence likewise the ordinary dictionary for word spelling check.

In the RAM 50, a present position memory which sequentially renews and stores the present position of the carriage 22 (print head) from the absolute origin so as to correspond to the print position in the typewriter mode, a line buffer 51 for sequentially storing so as to correspond to the print position about 500 characters of data such as printed characters in the same mode, and a text memory 52 for storing input data inputted from the keyboard 3 as file data in the memory mode, a cursor display position counter 53 for counting the cursor display position in response to the cursor movement so as to correspond to each display position of a display 75, a cursor position pointer 54 for pointing an address in the line buffer 51 so as to correspond to data of the cursor display position counter 53, the users' dictionary memory 55 which can freely register and delete a word such as a proper noun not stored in the dictionary memory 42, various memories for temporarily storing the result of processing in the main CPU 30, a register mode flag 56 set when the register key 11 is operated, a delete mode flag 57 set when the delete key 12 is operated, a word data pointer 58 which sequentially detects the position of the head character of word in the line buffer 51 and stores the addresses thereof and the like are installed.

In the typewriter mode, according to the control program, the main CPU 30 makes the printing mechanism PM print characters and symbols corresponding to data inputted from each character key, and controls the line buffer 51 to store sequentially the printed data by a predetermined amount so as to correspond to the print position.

Also, in the memory mode, it controls the line buffer 51 to store the input data of one print line, controls the display 75 to display the input data, and controls the text memory 52 to store the input data of one line in response to an operation of a return key.

The displaying mechanism D is constituted with an interface 70, a CPU 71 for display, a character generator 72, a display controller 73 and the LCD display 75, and the connection thereof is made as shown in the diagram.

In the character generator 72, about 400 kinds of dot-matrix display data are stored correspondingly to code data for displaying characters and symbols on the display 75.

Based on command data and character data outputted from the main CPU 30 through the interface 70, the CPU 71 for display reads out display data corresponding to these data from the character generator 72, and outputs the display data to the display controller 73. The display controller 73 writes the display data to a RAM 74 for display, and simultaneously outputs a display signal corresponding to the display data to the display 75. Furthermore, the CPU 71 for display performs a cursor move control of pointing out the address of destination of the cursor movement to the display controller 73 in response to cursor move command data from the main CPU 30 through the interface 70.

When the delete key is operated, based on data of the line buffer 51, the same type 27 as the printed character is hammered through the correction ribbon 29, and the printed character is erased.

In the case of the spelling check mode, by operating a word sectioning key (including symbol keys such as period, comma, colon and semicolon keys) such as the space key or the return key following input of character data of a word, words of the same spelling are detected by checking the inputted word against each word in the dictionary memory 42 and the users' dictionary memory 55. This spelling check processing is the same as the existing one, and therefore detailed description thereon is omitted.

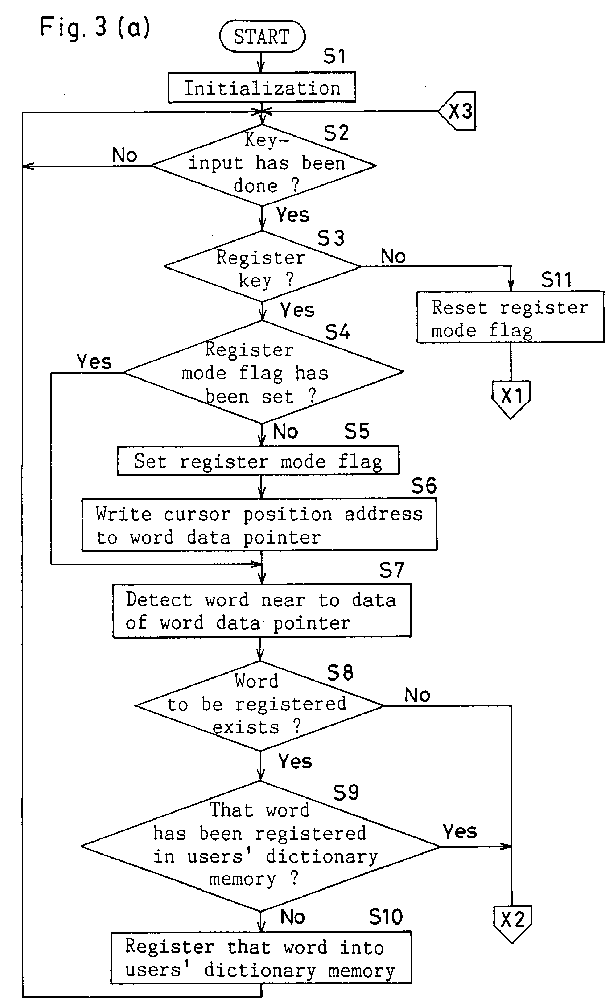

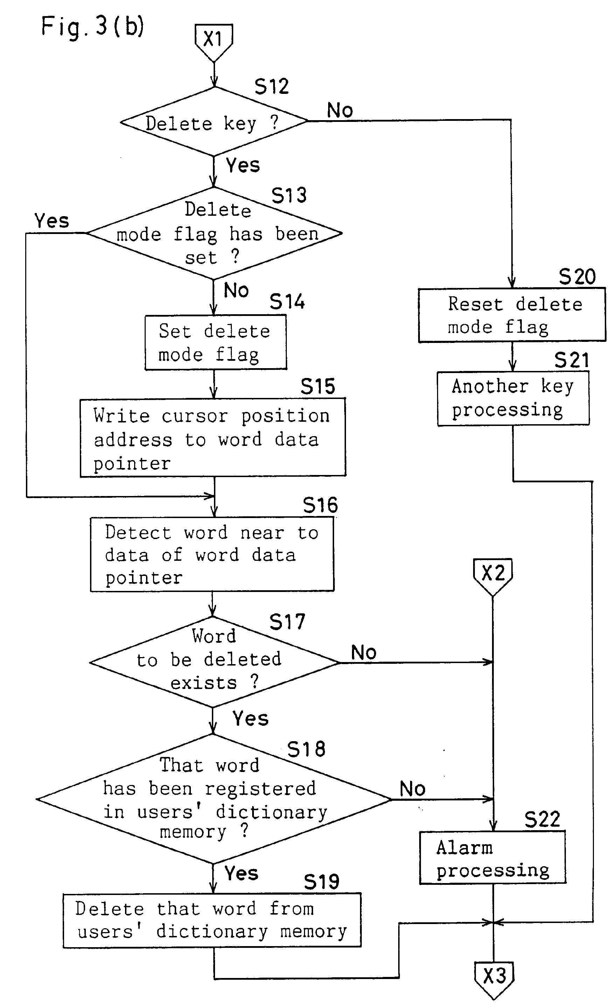

Next, description is made on register/delete processing control performed by the controlling apparatus C of the electronic typewriter 1 in the case where the word inputted and displayed on the display 75 in the memory mode is registered/deleted into/from the users' dictionary memory 55 with reference to a flow chart in Fig. 3.

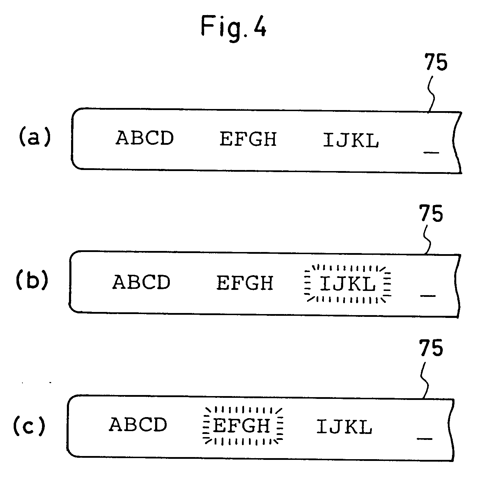

In addition, when this control is started, for example, as shown in Fig. 4(a), words "ABCD", "EFGH" and "IJKL" have been inputted and the space key has been operated three times.

When the power switch of the typewriter is turned on, this control is started, and processing proceed to step S1 (hereinafter expressed simply as S1, and the same is true of the other steps), and initialization is executed, and processing waits for a key-input in S2.

When a key is operated, in S3, judgment is made on whether it is the register key 11 or not, and when it is the register key 11, in the next S4, judgment is made on whether or not the register mode flag 56 has been set based on data of the register mode flag 56, and when it has not been set, it is set in the following S5. When the register mode flag 56 has been set in S4, processing proceeds to S7.

In the next S6, data of the cursor position pointer 54 (cursor position address data) is written to the word data pointer 58. In the following S7, based on data of the word data pointer 58 and the line buffer 51, a word near to the word data pointer 58 in the direction reverse to the rightward moving direction of the cursor is detected from the data of the word data pointer 58, and in the next S8, judgment is made on whether or not the word to be registered is present in the line buffer 51, and when the word to be registered is present, the position of the head character of the word (address of the head character) is written to the word data pointer 58, and processing proceeds to S9. For example, as shown in Fig. 4(a), the word data pointer 58 points out the head character "I" of the word "IJKL".

In S9, judgment is made on whether or not the word to be registered has already been registered in either of the dictionary memory 42 and the users' dictionary memory 55 based on data of the both dictionary memories 42 and 55, that is, the word undergoes spelling check processing, and when the result of the judgment is No (wrong spelling) and the word is not registered in the both dictionary memories 42 and 55, in the next S10, the word is registered into the users' dictionary memory 55, and processing returns to S2. At this time, for example, as shown in Fig. 4(b), the word "IJKL" to be registered into the users' dictionary memory 55 blinks.

In addition, when the judgment is No in S8 or when the judgment is Yes in S9, processing proceeds to S22 and alarm is outputted by a buzzer or a lamp, and processing returns to S2.

When the register key 11 is operated consecutively, steps S2 - S4 and S7 - S10 are repeated, the word data pointer 58 sequentially points out the position of the head character of the word existing in the direction reverse to the rightward moving direction of the cursor from the word pointed out currently by the word data pointer 58, being written to the line buffer 51, and then the words pointed out by the word data pointer 58 are written sequentially to the users' dictionary memory 55. At this time, for example, as shown in Fig. 4(c), the words to be written to the users' dictionary memory 55 blink in sequence.

When the delete key 12 is operated, processing proceeds through S2 - S3 to S11, and the register mode flag is reset, and judgment is made to be Yes in the following S12, and processing proceeds to S13.

In S13, based on data of the delete mode flag 57, judgment is made on whether or not the delete mode flag 57 has been set, and if not set, it is set in the following S14. When the delete mode flag 57 has been set in S13, processing proceeds to S16.

In the next S15, data of the cursor position pointer 54 (cursor position address data) is written to the word data pointer 58. In the next S16, based on data of the word data pointer 58 and the line buffer 51, a word near to the word data pointer 58 in the direction reverse to the rightward moving direction of the cursor is detected from the data of the word data pointer 58, and in the following S17, judgment is made on whether or not the word to be deleted exists, and when the word to be deleted is present, the position of the head character of the word (address of the head character) is written to the word data pointer 58, and processing proceeds to S18. For example, as shown in Fig. 4(a), the word data pointer 58 points out the head character "I" of the word "IJKL".

In S18, based on data of the users' dictionary memory 55, judgment is made on whether or not the word to be deleted has already been registered in the users' dictionary memory 55, that is, the word undergoes spelling check processing, and when no wrong spelling is detected as a result of judgment and the word is registered in the users' dictionary memory 55, the word is deleted from the users' dictionary memory 55 in the following step S19, and processing returns to S2. At this time, for example, as shown in Fig. 4(b), the word "IJKL" to be deleted from the users' dictionary memory 55 blinks.

In addition, when judgment is made to be No in S17 or judgment is made to be No in S18, processing proceeds to S22, and alarm is outputted by a buzzer or a lamp, and processing returns to S2.

When the delete key 12 is operated consecutively, steps S2 - S3, S11 - S13 and S16 - S19 are repeated, and the word data pointer 58 sequentially points out the positions of the head characters of the words existing in the direction reverse to the rightward moving direction of the cursor from the word currently pointed out by the word data pointer 58, and they are written to the line buffer 51, and the words pointed out by the word data pointer 58 are deleted in sequence from the users' dictionary memory 55. At this time, for example, as shown in Fig. 4(c), the words to be deleted from the users' dictionary memory 55 blink in sequence.

When judgment is made to be No in S12, that is, when a key other than the register key 11 or the delete key 12 is operated, processing proceeds to S20, and the delete mode flag 57 is reset, and in the following S21, according to the key operation, display control, printing control and the like as a general typewriter are executed, and processing returns to S2.

In addition, in the above-mentioned embodiment one word is registered/deleted into/from the users' dictionary memory 55 every time the register key 11/the delete key 12 is depressed, but it is also possible that a plurality of words written to the line buffer 51 are written to the users' dictionary memory 55 by one-time operation of the register key 11 and are deleted from the users' dictionary memory 55 by one-time operation of the delete key 12.

As described above, each word to be registered/deleted into/from the users' dictionary memory 55 which is inputted in advance and displayed on the display 75 is not required to be cursor-pointed by operation of the cursor move key, and therefore the operability is improved and the efficiency of register/delete processing is enhanced.

In addition, in the aforementioned embodiment, each word displayed on the left side from the cursor display position is registered/deleted into/from the users' dictionary memory 55, but it is also possible that each word displayed on the right side from the cursor display position is registered or deleted sequentially from the word nearest to the cursor display position into or from the users' dictionary memory 55.

Furthermore, in the aforementioned embodiment, words to be registered or deleted into or from the users' dictionary memory 55 are displayed on the display 75 in the memory mode, but it is also possible that the present invention is applied to the typewriter mode, and each word printed on a print paper is registered or deleted into or from the users' dictionary memory 55. In this case also, each word is not required to be pointed out by moving the carriage by operation of the space key or the backspace key, and therefore the operability and the efficiency of register/delete processing are improved. In addition, at this time, the carriage 22 (print head) may be automatically moved in sequence to the print position of the word to be registered or to the print position of the word to be deleted.

## Claims

1. A word processor comprising:
input means (3) for entering data of characters, symbols and the like;
output means (PM,75) for outputting characters and symbols onto an output medium (75);
a users' dictionary memory (55) for storing entered words and phrases; and
register control means (30) for storing a word in said users' dictionary memory (55) on receiving a register command; characterised in that
the word to be stored is the word nearest to a pointer element (58) of said output means, in one of the forward space and back space directions, among words outputted onto said output medium, even when said word is separated from said pointer element by a plurality of spaces.

2. A word processor according to claim 1 further comprising delete control means for deleting, from said users' dictionary memory (55) on receiving a delete command, the word nearest to the pointer element (58) of the output means (PM,75) in one of the forward space and back space directions among words outputted onto said output medium (75), even when said word is separated from said pointer element by a plurality of spaces.

3. A word processor according to claim 2 characterised in that said input means (3) has a register key (11) for inputting a register command signal; a delete key (12) for inputting a delete command signal; a first memory (51) for storing data inputted from said input means; and a second memory (53) for storing the present position of said pointer element (58) of said output means (PM,75); wherein the output means (PM,75) outputs characters and symbols corresponding to data stored in said first memory (51); said register control means (30) operates on the basis of data in said second memory (53) and data in said first memory (51) on receiving said register command signal entered from said register key (11); and said delete control means (30) operates on the basis of data in said second memory (53) and data in said first memory (51) on receiving said delete command signal entered from said delete key (12).

4. A word processor according to claim 2 or 3, wherein the next nearest words to said pointer element (58) in one of the forward space and back space directions are sequentially stored in or deleted from said user's dictionary memory (55) as said register key (11) or said delete key (12) is operated consecutively.

5. A word processor according to any preceding claim, wherein said output means is a displaying means (75).

6. A word processor apparatus according to claim 3 and claim 5, wherein said displaying means comprises a one-line display (75) and said first memory is a one-line buffer (51).

7. A word processor according to claim 5 or 6, wherein said register control and/or delete control means (30) makes the word to be registered and/or deleted flash among words displayed on said displaying means (75).

8. A word processor according to any one of claims 1 to 4, wherein said output means is a printing means (PM) printing characters and symbols on a printing medium.

9. A word processor according to claim 3 or claim 3 and any one of claims 4 to 8, wherein said register control means (30) comprises a word pointer storing an address in said first memory (51) of the head character of the word to be registered.

10. A word processor according to claim 3 or claim 3 and any one of claims 4 to 9 wherein said delete control means (30) comprises a word pointer storing an address in said first memory (51) of the head character of the word to be deleted.

11. A word processor according to any one of the preceding claims further comprising a dictionary memory (42) for storing various words unerasably.

12. A word processor according to any one of the preceding claims further comprising comparing means for determining whether or not a word to be stored already exists in the users' dictionary.

## Patentansprüche

1. Textverarbeitungssystem mit:
Eingabemittel (3) zum Eingeben von Daten von Zeichen, Symbolen und ähnlichem;
Ausgabemittel (PM, 75) zum Ausgeben von Zeichen und Symbolen auf ein Ausgabemedium (75);
einem Benutzer-Wörterbuchspeicher (55) zum Speichern eingegebener Wörter und Redewendungen; und
Registersteuermittel (30) zum Speichern eines Wortes in dem Benutzer-Wörterbuchspeicher (55) auf das Empfangen eines Registerbefehles;
dadurch gekennzeichnet,
daß das zu speichernde Wort das Wort, das am nächsten zu einem Zeigerelement (58) des Ausgabemittels in einer der Vorwärtszwischenraum- und Rückwärtszwischenraumrichtungen ist, zwischen auf das Ausgabemedium ausgegebenen Wörtern ist, selbst wenn das Wort von dem Zeigerelement um eine Mehrzahl von Zwischenräumen entfernt ist.

2. Textverarbeitungssystem nach Anspruch 1, weiter mit Löschsteuermitteln zum Löschen aus dem Benutzerwörterbuchspeicher (55) auf Empfangen eines Löschbefehles des Wortes, das am nächsten zu dem Zeigerelement (58) des Ausgabemittels (PM, 75) in einer der Vorwärtszwischenraum- und Rückwärtszwischenraumrichtungen ist, zwischen auf das Ausgabemedium ausgegebenen Wörtern, selbst wenn das Wort von dem Zeigerelement um eine Mehrzahl von Zwischenräumen entfernt ist.

3. Textverarbeitungssystem nach Anspruch 2,
dadurch gekennzeichnet, daß das Eingabemittel (3) eine Registertaste (11) zum Eingeben eines Registerbefehlssignales; eine Löschtaste (12) zum Eingeben eines Löschbefehlssignales; einen ersten Speicher (51) zum Speichern der von dem Eingabemittel abgegebenen Daten und einen zweiten Speicher (53) zum Speichern der gegenwärtigen Position des Zeigerelementes (58) des Ausgabemittels (PM, 75) aufweist;
wobei das Ausgabemittel (PM, 75) Zeichen und Symbole ausgibt, die den in dem ersten Speicher (51) gespeicherten Daten entsprechen; das Registersteuermittel (30) auf der Basis der Daten in dem zweiten Speicher (53) und der Daten in dem ersten Speicher (51) auf Empfangen des Registerbefehlssignales tätig ist, das von der Registertaste (11) eingegeben ist; und das Löschsteuermittel (30) auf der Basis der Daten in dem zweiten Speicher (53) und der Daten in dem ersten Speicher (51) auf Empfangen des Löschbefehlssignales tätig ist, das von der Löschtaste (12) eingegeben ist.

4. Textverarbeitungssytem nach Anspruch 2 oder 3,
bei dem die nächsten der dem Zeigerelement (58) in einer der Vorwärtszwischenraum- und Rückwärtszwischenraumrichtungen nächsten Wörter aufeinanderfolgend in dem Benutzerwörterbuchspeicher (55) gespeichert werden oder daraus gelöscht werden, wenn die Registertaste (11) oder die Löschtaste (12) aufeinanderfolgend betätigt wird.

5. Textverarbeitungssystem nach einem der vorangehenden Ansprüche, bei dem das Ausgabemittel ein Darstellungsmittel (75) ist.

6. Textverarbeitungssystem nach Anspruch 3 und Anspruch 5, bei dem das Darstellungsmittel eine einzeilige Darstellung (75) ist und der erste Speicher ein Einzeilenpuffer (51) ist.

7. Textverarbeitungssystem nach Anspruch 5 oder 6, bei dem das Registersteuer- und/oder Löschsteuermittel (30) bewirkt, daß das zu registrierende und/oder zu löschende Wort zwischen den auf dem Darstellungsmittel (75) dargestellten Wörtern blinkt.

8. Textverarbeitungssystem nach einem der Ansprüche 1 bis 4, bei dem das Ausgabemittel ein Druckmittel (PM) ist, das Zeichen und Symbole auf ein Druckmedium druckt.

9. Textverarbeitungssystem nach Anspruch 3 oder Anspruch 3 und einem der Ansprüche 4 bis 8, bei dem das Registersteuermittel (30) einen Wortzeiger aufweist, der eine Adresse in dem ersten Speicher (51) des Kopfzeichens des zu registrierenden Wortes speichert.

10. Textverarbeitungssystem nach Anspruch 3 oder Anspruch 3 und einem der Ansprüche 4 bis 9, bei dem das Löschsteuermittel (30) einen Wortzeiger aufweist, der eine Adresse in dem ersten Speicher (51) des Kopfzeichens des zu löschenden Wortes speichert.

11. Textverarbeitungssystem nach einem der vorangehenden Ansprüche, weiter mit einem Wörterbuchspeicher (42) zum unauslöschbaren Speichern verschiedener Wörter.

12. Textverarbeitungssystem nach einem der vorangehenden Ansprüche weiter mit Vergleichsmittel zum Bestimmen, ob ein zu speicherndes Wort bereits in dem Benutzerwörterbuch existiert oder nicht.

## Revendications

1. Traitement de texte comportant :
des moyens d'entrée (3) destinés à entrer des données de caractères, symboles et analogue;
des moyens de sortie (PM, 75) destinés à sortir des caractères et symboles sur un support de sortie (75);
une mémoire (55) formant dictionnaire de l'utilisateur destinée à mémoriser des mots et des phrases entrés, et
des moyens de commande d'enregistrement (30) destinés à mémoriser un mot dans ladite mémoire (55) formant dictionnaire de l'utilisateur lors de la réception d'une commande d'enregistrement; caractérisé en ce que
le mot destiné à être mémorisé est le mot le plus près de l'élément formant indicateur (58) desdits moyens de sortie, dans une des directions d'espace avant et d'espace arrière, parmi les mots sortis sur ledit support de sortie, même lorsque ledit mot est séparé dudit élément formant indicateur par plusieurs espaces.

2. Traitement de texte selon la revendication 1, caractérisé en ce qu'il comporte en outre des moyens de commande d'effacement destinés à effacer, à partir de ladite mémoire (55) formant dictionnaire de l'utilisateur lors de la réception d'une commande d'effacement, le mot le plus près de l'élément formant indicateur (58) des moyens de sortie (PM, 75) dans une des directions d'espace avant et d'espace arrière parmi les mots sortis sur ledit support de sortie (75), même lorsque ledit mot est séparé dudit élément formant indicateur par plusieurs espaces.

3. Traitement de texte selon la revendication 2, caractérisé en ce que lesdits moyens d'entrée (3) ont une touche d'enregistrement (11) destinée à entrer un signal de commande d'enregistrement; une touche d'effacement (12) destinée à entrer un signal de commande d'effacement, une première mémoire (51) destinée à mémoriser des données entrées à partir desdits moyens d'entrée; et une seconde mémoire (53) destinée à mémoriser la position actuelle dudit élément formant indicateur (58) desdits moyens de sortie (PM, 75); en ce que les moyens de sortie (PM, 75) sortent des caractères et symboles correspondants aux données mémorisées dans ladite première mémoire (51); lesdits moyens de commande d'enregistrement (30) agissent sur la base des données situées dans ladite seconde mémoire (53) et des données situées dans ladite première mémoire (51) lors de la réception dudit signal de commande d'enregistrement entré à partir de ladite touche d'enregistrement (11); et lesdits moyens de commande d'effacement (30) agissent sur la base des données situées dans ladite seconde mémoire (53) et des données situées dans ladite première mémoire (51) lors de la réception dudit signal de commande d'effacement entré à partir de la touche d'effacement (12).

4. Traitement de texte selon la revendication 2 ou 3, caractérisé en ce que les prochains mots le plus près dudit élément formant indicateur (58) dans une des directions d'espace avant et d'espace arrière sont mémorisés de manière séquentielle dans ladite mémoire (55) formant dictionnaire de l'utilisateur ou effacés de celle-ci lorsque ladite touche d'enregistrement (11) ou ladite touche d'effacement (12) est actionnée de manière consécutive.

5. Traitement de texte selon l'une quelconque des revendications précédentes, caractérisé en ce que lesdits moyens de sortie sont des moyens d'affichage (75).

6. Appareil de traitement de texte selon la revendication 3 et 5, caractérisé en ce que lesdits moyens d'affichage comportent un affichage direct (75) et ladite première mémoire est un tampon direct (51).

7. Traitement de texte selon la revendication 5 ou 6, caractérisé en ce que lesdits moyens de commande d'enregistrement et/ou de commande d'effacement (30) font briller le mot destiné à être enregistré et/ou effacé parmi les mots affichés sur lesdits moyens d'affichage (75).

8. Traitement de texte selon l'une quelconque des revendications 1 à 4, caractérisé en ce que lesdits moyens de sortie sont des moyens d'impression (PM) imprimant des caractères et des symboles sur un support d'impression.

9. Traitement de texte selon la revendication 3 ou la revendication 3 et l'une quelconque des revendications 4 à 8, caractérisé en ce que lesdits moyens de commande d'enregistrement (30) comportent un indicateur de mot mémorisant une adresse dans ladite première mémoire (51) du caractère de tête du mot destiné à être enregistré.

10. Traitement de texte selon la revendication 3 ou la revendication 3 et l'une quelconque des revendications 4 à 9, caractérisé en ce que lesdits moyens de commande d'effacement (30) comportent un indicateur de mot mémorisant une adresse dans ladite première mémoire (51) du caractère de tête du mot destiné à être effacé.

11. Traitement de texte selon l'une quelconque des revendications précédentes, caractérisé en ce qu'il comporte en outre une mémoire formant dictionnaire (42) destinée à mémoriser différents mots ne pouvant par être effacés.

12. Traitement de texte selon l'une quelconque des revendications précédentes, caractérisé en ce qu'il comporte en outre des moyens de comparaison pour déterminer si oui ou non un mot destiné à être mémorisé existe déjà dans le dictionnaire de l'utilisateur.
